# EUROPÄISCHE PATENTANMELDUNG

(11) **EP 4 492 226 A1**
(43) Veröffentlichungstag der Anmeldung: **15.01.2025**
(21) Anmeldenummer: 23185063.7
(22) Anmeldetag: 12.07.2023
(51) Int. Cl.: G06F 8/71, G01R 31/3185, G06F 30/34, G06F 21/76

(54) **FPGA BUILD- UND INITIALISIERUNGS-VERFAHREN**

(71) Anmelder: dSPACE GmbH, 33102 Paderborn (DE)
(72) Erfinder: Kalte, Heiko, 33102 Paderborn (DE); Lubeley, Dominik, 33102 Paderborn (DE)

(57) **Zusammenfassung**

Computersystem zum fehlerfreien Durchlaufen von mehreren von einem Computer gesteuerten Build- und/oder Initialisierungsschritten für eine FPGA-basierte Applikation, wobei das Computersystem dazu eingerichtet ist, einen FPGA-Programmcode im Rahmen von Build-Schritten zu erzeugen, diesen auf einen angesteuerten FPGA zu transferieren und im Rahmen von Initialisierungsschritten für ein Ablaufen vorzubereiten, wobei das Computersystem weiter dazu eingerichtet ist, Ergebnisse der Build- und/oder Initialisierungsschritte zentral in einen beschreibbaren Speicher abzuspeichern und/oder zu kontrollieren und durch Auslesen des beschreibbaren Speichers vor einem Build- und/oder Initialisierungsschritt und/oder vor Ablaufen des initialisierten FPGA-Programmcodes zu prüfen, ob mindestens ein vorheriger Build- und/oder Initialisierungsschritt fehlerfrei durchlaufen worden ist. Damit wird ein Computersystem bereitgestellt, mit dem die Nachteile des Standes der Technik vermieden werden.

## Beschreibung

Die Erfindung betrifft ein Computersystem und ein zugeordnetes Verfahren zum Sicherstellen eines fehlerfreien Durchlaufens von mehreren Build- und/oder Initialisierungsschritten für eine FPGA-basierte Applikation, mit einem Computer, einem angesteuerten FPGA und einem zentralen beschreibbaren Speicher.

Die Erfindung bezieht sich insbesondere auf eine Erstellung von Programmcode, wobei die Erstellung des Programmcodes auch als Build bezeichnet wird und dessen Ergebnis insbesondere als FPGA Build Result, und Initialisierungsroutinen von FPGA-basierten Regelungssystemen insbesondere in sicherheitskritischem Umfeld. Die modulare Erstellung des Programmcodes eines FPGA Systems kann sich dabei aus partiellen Builds, hierarchischen Builds und die Integration von weiteren Softwaremodulen, auch häufig als PlugIns/Hooks bezeichnet, für spezielle Anwendungen oder Lösungen zusammensetzen. Daraus zu erstellende Software- und/oder Hardware-basierte Applikationen erfordern häufig vielfältige Initialisierungen, wie beispielsweise in der Mess- und Regelungstechnik ein Einschwingen von PLLs, Gigabit Transceiver Verbindungen, Applikations- und Anwender-spezifische Initialisierungsparameter, I/O Abgleichwerte, Berechnungen und Übertragungen von z.B. Motorkennlinien, externes Auslesen und Programmieren von Kanal-Abgleichwerten und die Einbindung von anwendungsspezifischem Programmcode.

Darüber hinaus erfordern Anwendungen häufig eine Abfrage, ob interne/externe Komponenten bereit sind, wie beispielsweise andere FPGA Module, andere FPGA Partitionen von partieller Rekonfiguration oder weitere Hardwarekomponenten. Hieraus resultiert eine hohe Komplexität für eine Initialisierung sowie für die Erstellung des Programmcodes oder Builds. Insbesondere kann es beim Fehlschlagen einer einzigen, nicht abgefangenen Initialisierungsroutine in einem FPGA-Regelungssystem zu folgenschweren Schäden kommen (z.B. bei Fahrerassistenz-Systemen (advanced driver-assistance system, ADAS/AD), Elektroantrieben, Hochvolt-Batteriesimulationen, Aerospace Anwendungen). Deshalb ist vor einem Start einer FPGA Applikation sicherzustellen, dass sowohl alle Build- als auch alle Initialisierungsroutinen ordnungsgemäß und fehlerfrei durchlaufen wurden, denn andernfalls sollte ein Betrieb in sicherheitskritischen Anwendungen abgebrochen werden. Rapid Control Prototyping (RCP) Plattformen für ein modellbasiertes Design von Prozessor- und FPGA-basierten Echtzeitapplikationen weisen hohe Anforderungen an eine fehlerfreie Initialisierung und einen zuverlässigen Betrieb auf. Für eine Entwicklung von FPGA-basierten Echtzeitapplikationen steht Anwendern beispielsweise häufig eine Programmierumgebung für Prozessoren wie ein FPGA zur Verfügung, welcher es selbst Entwicklern ohne FPGA-Kenntnisse erlaubt, umfangreiche FPGA-Anwendungen zu erstellen, per Knopfdruck den Programmcode zu erstellen und zur Ausführung beispielsweise auf Prototyp-Plattformen zu übertragen. Anschließend kann eine solche Prototyp-Plattform nicht nur zur Simulation, sondern auch als Steuergerät für spätere Endanwendungen in Serie verwendet werden.

Bislang wurde das Problem eines korrekten Programmcodes oder Builds und der korrekten Initialisierung dezentral bzw. sequenziell gelöst. Hierzu werden verschiedene Schritte in ihrer Umgebung überwacht und beim sequenziell nächsten Schritt wird implizit davon ausgegangen, dass vorherige Schritte korrekt durchlaufen wurden und dass bei einem Fehler in den vorherigen Schritten entsprechend abgebrochen wurde. Dies führt in der Praxis in den jeweiligen Build- und Initialisierungsumgebungen häufig zu einer individuellen und fehleranfälligen Anwendung. Beispielsweise bei einem nicht korrekt abgefangen Fehler in einem vorherigen Schritt ist es unter bestimmten Umständen dennoch möglich, dass der gesamte Build und Initialisierungsprozess vollständig durchlaufen und die FPGA-Applikation gestartet wird, obwohl Zwischenschritte einen potenziell kritischen, insbesondere sicherheitsrelevanten Fehler verursacht haben. Die Wahrscheinlichkeit für solche Fehler ist insbesondere dann signifikant hoch, wenn der Gesamtprozess oder Teile hiervon von unterschiedlichen Personen oder Anbietern implementiert wurde, zum Beispiel bei von ursprünglichen Produktentwicklern implementierten FPGA-Build-Prozessen, einer FPGA-Initialisierung durch Custom Funktion Code eines Applikations-Ingenieurs und FPGA-Anwendungsinitialisierung des Anwenders (z.B. Laden von spezifischen Kennlinien, Bereitschaft von externer Anwender-Hardware). Derartige potenziell auftretende Konflikte können hohe Schäden an Hardwarekomponenten hervorrufen.

Zur Erhöhung der Zuverlässigkeit von FPGA-basierter Hardware existieren unterschiedliche Ansätze, wie das in der Druckschrift US 20170116363 A1 beschriebene Verfahren zur präzisen FPGA Power Analyse und zur Vermeidung von Überlast, sowie ein in der Druckschrift EP 3647801 A1 beschriebenes Konfigurationsvalidierungs-Verfahren. Die Konfigurationsvalidierungs-Verfahren ermöglichen das Erkennen einer Fehlersituation und erlauben es dem Anwender, durch ein Fail-Safe-Signal ein selbst definiertes Fail-Safe Verhalten einzuleiten. Zudem enthält ein Status Register gemäß Stand der Technik nur Informationen aus der Initialisierungs- und/oder Laufzeit. Dabei sind Anzahl von Bits und deren Bedeutung im Stand der Technik fest definiert. Eine korrekte Initialisierung kann jedoch auch durch die Konfigurationsvalidierungs-Verfahren nicht in ausreichendem Maße gewährleistet werden.

Davon ausgehend ist es die Aufgabe der Erfindung, ein Computersystem bereitzustellen, mit dem eine verbesserte Initialisierung und/oder Erstellung von Programmcode gewährleistet werden kann. Insbesondere ist vor einem Start einer FPGA-basierten Applikation sicherzustellen, dass die Build- und/oder Initialisierungsschritte ordnungsgemäß und fehlerfrei durchlaufen wurden.

Diese Aufgabe wird durch die Merkmale der unabhängigen Ansprüche gelöst. Bevorzugte Weiterbildungen finden sich in den Unteransprüchen.

Erfindungsgemäß ist vorgesehen, ein Computersystem zum fehlerfreien Durchlaufen von mehreren von einem Computer gesteuerten Build- und/oder Initialisierungsschritten für eine FPGA-basierte Applikation bereitzustellen, wobei das Computersystem dazu eingerichtet ist, einen FPGA-Programmcode im Rahmen von Build-Schritten zu erzeugen, diesen auf einen angesteuerten FPGA zu transferieren und im Rahmen von Initialisierungsschritten für ein Ablaufen vorzubereiten, wobei das Computersystem weiter dazu eingerichtet ist, Ergebnisse der Build- und/oder Initialisierungsschritte zentral in einen beschreibbaren Speicher abzuspeichern und/oder zu kontrollieren und durch Auslesen des beschreibbaren Speichers vor einem Build- und/oder Initialisierungsschritt und/oder vor Ablaufen des initialisierten FPGA-Programmcodes zu prüfen, ob mindestens ein vorheriger Build- und/oder Initialisierungsschritt fehlerfrei durchlaufen worden ist. In Bezug auf das vorgenannte Prüfen, so umfasst dies insbesondere das Prüfen eines kritischen Schritts und Loggen der übrigen Schritte. Im Speziellen sind alle vorherigen Schritte fehlerfrei zu durchlaufen.

Auf diese Weise wird ein Computersystem bereitgestellt, welches insbesondere bei einem Gesamtsystem mit einer Vielzahl von Software- und Hardwarekomponenten vor dem Start einer FPGA-basierten Applikation sicherstellt, dass sowohl alle Build- als auch alle Initialisierungsroutinen ordnungsgemäß und fehlerfrei durchlaufen werden. Die Erfindung ermöglicht damit einen sicheren und vollständigen FPGA-Buildverlauf sowie die Prüfung eines Status von angebundenen externen Komponenten und Model- oder Codeanteilen weiterer Anwender.

Das erfindungsgemäße Computersystem erlaubt es, das erfolgreiche oder fehlerfreie Durchlaufen der verschiedenen Build- und Initialisierungsschritte zu persistieren und unabhängig von ihrer Umgebung (Hardware-/Software) für alle Build- und Initialisierungsschritte zentral sichtbar zu machen. Auf diese Weise können komplexe Build- und Initialisierungsschritte handhabbar gemacht werden und ein Schaden durch unvollständige Build- oder Initialisierungsschritte kann verhindert werden. Insbesondere die Verwendung eines zentralen Speichers ermöglicht ein Zusammenführen und/oder Kontrollieren der Ergebnisse der vom Computer gesteuerten Build- und/oder Initialisierungsschritte einer FPGA-basierten Applikation. Vorzugweise durch das Setzen von vordefinierten funktionalen Bits in dem beschreibbaren Speicher kann eine solche Verwaltung von Ergebnissen erfolgen. Die Anzahl der Bits im beschreibbaren Speicher sowie deren Belegung ist grundsätzlich a priori anpassbar, so dass beliebige Plugins oder externe Komponenten oder die Anwender eigene Sicherheitsbits zur Überprüfung hinzufügen können.

Die Erfindung stellt eine wesentliche Neuerung für einen abgesicherten Entstehungsprozess mit Build- und/oder Initialisierungsschritten einer FPGA-Applikation dar, die noch vor der Laufzeit der Applikation zum Tragen kommt. Sie stellt daher eine wertvolle Ergänzung zur funktionalen Sicherheit dar. In einer vorteilhaften Erweiterung können auch Zustände und Fehler während der normalen Laufzeit über die vorgeschlagenen Mechanismen detektiert und/oder gemeldet werden, was dann beispielsweise zum Runterfahren der Applikation (Shut Down), oder einem Fail-Safe Modus, führen kann.

Ein FPGA bezeichnet ein Field Programmable Gate Array und damit ein programmierbares Rechenwerk in Form einer elektronischen Schaltung, welcher individuell von einem Anwender programmiert werden kann. Dabei handelt es sich üblicherweise um einen integrierten Schaltkreis mit einer programmierbaren Logikgatter-Anordnung. Die Schaltungsstruktur und die auszuführende Logik des FPGAs lassen sich zumeist über eine Hardware-Beschreibungssprache anpassen und individuell konfigurieren, bevor der daraus generierte Bitstrom in den FPGA geschrieben wird. FPGAs sind für verschiedene Zwecke wie System-on-a-Chip-Anwendungen (SoC-Anwendungen mit einer Kombination aus Mikrocontroller und FPGA) einsetzbar und in unterschiedlichen Ausführungen erhältlich. Zentrale und häufig vorliegende Komponenten von Field Programmable Gate Arrays sind Flip-Flops, Eingangs-/Ausgangs-Blöcke, Look-Up Tables (LUTs), Taktgeneratoren, Signalprozessoren (DSPs) und Speichermöglichkeiten wie Block RAM. Neben einem eingebetteten Block RAM lassen sich Informationen auch außerhalb des FPGAs abspeichern, zum Beispiel mit Hilfe von DRAM, SRAM, Speicherkarten und anderen Technologien. Die Verschaltung der unterschiedlichen Komponenten und Logikbausteine ist üblicherweise flexibel in teils umfangreichen Freiheitsgraden konfigurierbar.

Der Begriff FPGA bezeichnet üblicherweise zunächst einen speziellen integrierten Schaltkreis (IC) der Digitaltechnik, in welchen eine logische Schaltung geladen werden kann. Für zahlreiche Anwendungen ist ein solcher FPGA auch ersetzbar durch andere Bauteile wie Prozessoren. Erfindungsgemäß kann ein FPGA auch einen SoC umfassen.

Ein fehlerfreies Durchlaufen eines Build- und/oder Initialisierungsschrittes bezeichnet vor allem ein Ergebnis, in dem keine Fehler auftreten, welche zu Schäden und/oder signifikanten Folgen für die Anwendung und/oder folgende Build- und/oder Initialisierungsschritte führen. Solche Fehler werden häufig auch schwere Fehler genannt in Abgrenzung zu nicht folgenschweren Fehlern, welche häufig als leichte Fehler bezeichnet werden. Das vorgeschlagene Verfahren und/oder die vorgeschlagene Vorrichtung kann neben schweren aber auch leichte Fehler erkennen und/oder vermeiden.

Damit in den verschiedenen Phasen bis zur Laufzeit des generierten Programmcodes respektive die angebundenen Komponenten Ergebnisse in Form von Daten an die richtigen Bitpositionen des beschreibbaren Speichers schreiben, kann eine Zuteilung von SchreibZugriffen oder Berechtigungen für die Phasen oder angebundenen Komponenten in Bezug auf bestimmte Bitpositionen erfolgen. Dies erfolgt beim Build typischerweise mittels einer API (Application Programming Interface). Aus den Bitpositionen können dann wiederum (Freischalt-)Bitmasken für die Auswertung/Ausgänge erzeugt werden. Beispielsweise kann dies in folgender Form erfolgen: Angebundene Komponenten senden Informationen, wie viele Bits sie setzen und welchen Typs sie sind, beispielsweise Build oder Init. Daraus ergibt sich vorzugsweise eine Gesamtmenge an Build- und Init-Bits und entsprechende Bitmasken für eine automatische Überprüfung einer korrekten Initialisierung aller Bestandteile des Computersystems, ohne dass der Anwender eingreifen muss.

Gemäß einer bevorzugten Weiterbildung der Erfindung ist der beschreibbare Speicher ein Block RAM, welcher insbesondere Teil des FPGA ist. Ein Block RAM oder Block Memory (BRAM) ist ein RAM-Typ, der in FPGAs als eingebetteter RAM zum Einsatz kommt. Er ist für unterschiedliche Zwecke wie für Pufferspeicher oder FIFO-Speicher nutzbar. Block RAM hat pro Speicherblock typischerweise eine feste Speichergröße von 4, 8, 16 oder 32 Kilobit und kann in unterschiedlicher Anzahl von Speicherblöcken auf einem FPGA vorhanden sein. Bei dem Block RAM sich um einen bestimmten Typ von Random Access Memory, der als eingebetteter RAM-Speicher in FPGAs eingesetzt wird, neben weiteren Komponenten wie Flip-Flops, Look-Up Tables (LUTs) und Signalprozessoren (DSPs).

Vorzugsweise ist das Computersystem eingerichtet, einen Build- und/oder Initialisierungsschritt und/oder das Ablaufen des initialisierten FPGA-Programmcodes - insbesondere nur - dann durchzuführen, wenn der vorherige Build- und/oder Initialisierungsschritt fehlerfrei durchlaufen worden ist.

In einer bevorzugten Ausführungsform ist das Computersystem derart eingerichtet, dass auf dem beschreibbaren Speicher unter vordefinierten Bedingungen Schreibzugriff gewährt oder verwehrt wird. Dafür wird typischerweise eine spezielle Logik in der FPGA-Konfiguration implementiert. Ein üblicherweise im Stand der Technik in Bezug auf Zugriffskontrolle Verwendung findendes Statusregister ist nicht abgesichert gegen ein Überschreiben durch nachfolgende Initialisierungsphasen und es ist folglich nicht sichergestellt, dass Bitpositionen von angebundenen anderen Komponenten fälschlicherweise gar nicht oder sogar mehrfach beschrieben werden. Folglich erfolgt in einer vorteilhaften Ausführungsform eine Absicherung gegenüber Bitfehlern, welche mittels entsprechender Sicherheitsmechanismen umsetzbar ist, womit der schreibende Zugang zum beschreibbaren Speicher reglementiert bzw. eingeschränkt wird.

Die vordefinierten Bedingungen können insbesondere in Form einer Logik implementiert werden und sich insbesondere auf Parameter wie Berechtigung, Zeit und Frequenz oder Häufigkeit beziehen. Beispielsweise kann auch die Berechnung einer Prüfsumme erfolgen (Englisch: Checksum) oder die Parität geprüft werden (Parity/CRC32 Generate) nach jedem Schreib-Zugriff. Denkbar ist dann zum Beispiel die Abfolge: Read, Parity Check, Write, Parity Generate. Auch kann ein Parity/CRC32 Check vor jedem Lese-Zugriff erfolgen, wodurch verhindert wird, dass es aufgrund von äußeren Einflüssen, wie beispielweise natürliche Radioaktivität, zu Bit-Kippern kommen kann.

In einer ebenfalls bevorzugten Ausführungsform ist das Computersystem derart eingerichtet, dass das Computersystem auf dem beschreibbaren Speicher Schreib-Zugriffe auf vorbestimmte Bit-Bereiche unterbindet. Insbesondere kann eine Verriegelung von SchreibZugriffen auf bestimmte Bit-Bereiche erfolgen, wie beispielsweise z.B. auf den Initialisierungs-Bereich, nachdem dieser abgeschlossen wurde.

In einer besonderen Ausführungsform ist das Computersystem derart eingerichtet, auf dem beschreibbaren Speicher nur ein Bit pro Schreib-Zugriff zu ändern und/oder jedes Bit nur einmal zu ändern. Insbesondere bei mehrfachem Zugriff einer angebundenen Komponente kann es sinnvoll sein, dass diese lediglich ein Bit pro Schreib-Zugriff ändern kann oder diese lediglich eine einmalige Möglichkeit eingeräumt bekommt, ein Bit zu ändern.

Bevorzugt ist der angesteuerte FPGA und/oder die FPGA-basierte Applikation Teil eines echtzeitfähigen Systems. Insbesondere sollte bei Ablauf der fertig erstellten und/oder initialisierten FPGA-Applikation kein Taskaufruf, also die Berechnung eines Schritts, seine vorgegebene Taskperiode überschreiten. Der Begriff echtzeitfähig bezeichnet demnach eine Eigenschaft eines Systems, welches äußerst kurze Reaktionszeiten aufweist. Dabei ist die Reaktionszeit maximal so lang, dass die wesentlichen Abläufe und Funktionen des Systems nicht beeinträchtigt werden. Wesentlich für Echtzeitfähigkeit ist dabei, dass die Anwendungs-abhängigen Grenzwerte für die Latenzzeiten unbedingt eingehalten werden. Diese Eigenschaft ist besonders bei sicherheitsrelevanten (Regelungs-)Systemen oder auch Systemen zur Messung von Zeiten und Frequenzen von hoher Relevanz. Echtzeitfähige Systeme weisen insbesondere Latenzen im Bereich von Mikrosekunden auf. Welche Reaktionszeit tatsächlich nötig ist, hängt vom Anwendungsfall ab.

In einer weiteren bevorzugten Ausführungsform ist das Computersystem dazu eingerichtet, ein Regelungssystem oder Teile eines Regelkreises zu steuern und/oder zu simulieren. Teile eines Regelkreises umfassen dabei insbesondere auch einen Regler und eine Regelstrecke. Im Allgemeinen ist das Ziel eines Regelungssystems, die Regelgröße möglichst konstant auf den durch die Führungsgröße vorgegebenen Wert zu halten und dabei die Einflüsse durch Störgrößen zu kompensieren. Der Computer und/oder das Computersystem sind dazu eingerichtet, Signale mit einer externen Komponente oder einem zu testenden Gerät (Device Under Test) auszutauschen.

Ebenfalls bevorzugt kann der Computer - optional neben angebundene Komponenten - auch den Regler oder die Regelstrecke simulieren. Dies kann insbesondere dadurch erfolgen, dass gesendete als auch empfangene elektrische Signale oder Informationen einer Hardware- oder Softwarekomponente simuliert oder emuliert werden.

In einer ebenfalls bevorzugten Ausführungsform ist das Computersystem und/oder der Computer eingerichtet, einen oder mehrere der folgenden Build- und/oder Initialisierungsschritte auszuführen: VHDL Code Generierung, Synthese, Implementierung, Bitstrom Generierung, Erstellung eines FPGA Applikations-Container.

In einer weiteren Ausführungsform ist das Computersystem und/oder der Computer eingerichtet, auf dem zentralen Speicher eine Integritätsprüfung nach einem Schreib-Zugriff und/oder vor jedem Lese-Zugriff durchzuführen. Eine Integritätsprüfung kann insbesondere erfolgen über eine Paritäts-Prüfung oder die Bestimmung der Prüfsumme (sog. Checksum) oder des sogenannten Hashwertes.

Die Erfindung umfasst auch ein zugeordnetes Verfahren zum fehlerfreien Durchlaufen von mehreren von einem Computer gesteuerten Build- und/oder Initialisierungsschritten für eine FPGA-basierte Applikation, mit den Schritten
- Erzeugen eines FPGA-Programmcodes im Rahmen von Build-Schritten,
- Transferieren des erzeugten FPGA-Programmcodes auf einen FPGA (3),
- Ausführen von Initialisierungsschritten als Vorbereitung für ein Ablaufen des FPGAProgrammcodes,
- Abspeichern und Kontrollieren der Ergebnisse der Build- und/oder Initialisierungsschritte in einem zentralen beschreibbaren Speicher (4), und
- Prüfen im beschreibbaren Speicher (4), ob vorherige Build- und/oder Initialisierungsschritte fehlerfrei durchlaufen worden sind.

Bevorzugt erfolgt eine Prüfung des beschreibbaren Speichers bei oder vor einem N-ten Schritt (Build- und/oder Initialisierungsschritt) der Bits aller vorherigen N-1 Schritte, ob diese korrekt durchlaufen worden sind.

In einer bevorzugten Ausführungsform des Verfahrens erfolgt ein Durchführen eines weiteren Build- und/oder Initialisierungsschrittes und/oder das Ablaufen des initialisierten FPGA-Programmcodes - insbesondere nur - dann, wenn der vorherige Build- und/oder Initialisierungsschritt fehlerfrei durchlaufen worden ist. Ganz besonders bevorzugt werden der N-te Schritt und/oder alle weiteren geplanten Build- und/oder Initialisierungsschritte abgebrochen, wenn nicht alle vorherigen Build- und/oder Initialisierungsschritte korrekt durchlaufen worden sind.

Bevorzugt erfolgt bei dem Verfahren mittels API-Abfrage an eine Initialisierungs-Management-Komponente eine Zuteilung von Bitpositionen in dem beschreibbaren Speicher.

In einer bevorzugten Form des Verfahrens führt die Initialisierungs-Management-Komponente folgende Schritte aus:
- Zuweisung einer freien Bitposition für angeschlossene Hardware- und/oder Software-Komponenten durch die Initialisierungs-Management-Komponente,
- Protokollierung der übergebenen Bitposition und/oder Abspeichern einer Referenz für die Bitposition in einem beschreibbaren Speicher.

Weitere Vorteile und Ausgestaltungen des Verfahrens ergeben sich für den Fachmann aus dem zuvor beschriebenen Computersystem.

Die Erfindung umfasst ebenfalls die Verwendung des vorgeschriebenen Verfahrens für die modellbasierte Erstellung von Prozessor- und/oder FPGA-basierten Applikationen.

In der Zeichnung zeigen
- Fig. 1: eine schematische Abbildung mit einer erfindungsgemäßen Anordnung eines Computersystems mit einem Computer (PC), einem FPGA mit einem beschreibbaren Speicher sowie mit einer an den FPGA angebundene externe Komponente (DUT),
- Fig. 2: eine exemplarische, schematische Darstellung eines Build-Flows,
- Fig.3: eine schematische Abbildung zu den Eigenschaften eines erfindungsgemäßen abgesicherten Block RAMs oder BRAMs.

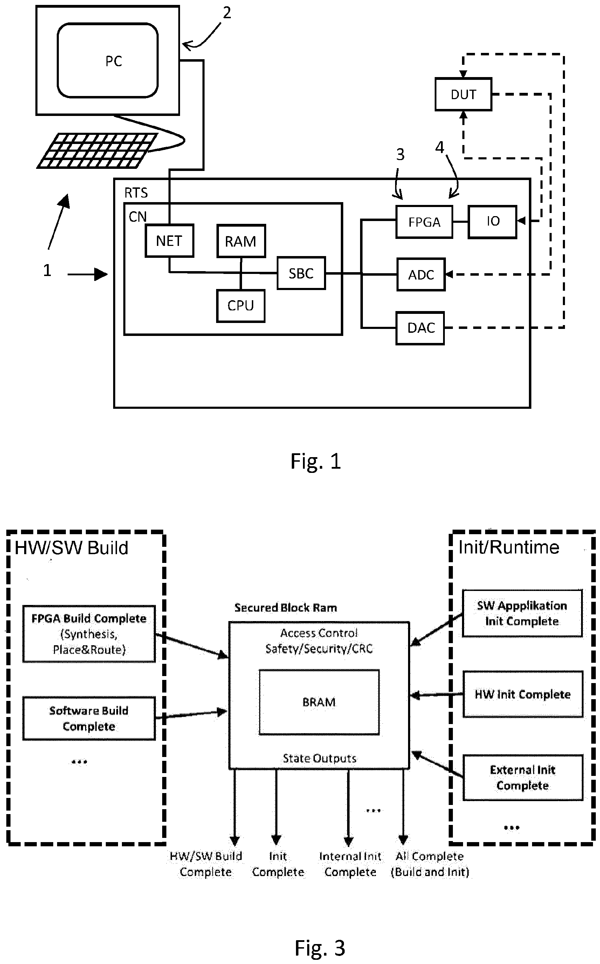

Die Figur 1 zeigt eine schematische Abbildung mit einer erfindungsgemäßen Anordnung eines Computersystems 1 mit einem Computer (PC), einem angebundenen Echtzeit-System (RTS, Real Time System), einer Recheneinheit (CN, Computing Node) und einem FPGA 3 mit beschreibbarem Speicher 2 und an den FPGA 3 über ein Ein-/Ausgabe-Modul (IO) angebundene externe Komponenten (DUT, Device Under Test). Die externe Komponente ist typischerweise auch verbunden mit einem Analog-Digital-Wandler (ADC) und/oder einem Digital-Analog-Wandler (DAC). Der Computer 2 dient insbesondere als übergeordnete Steuerungseinheit, im Besonderen für eine Rapid Control Prototyping (RCP) Plattformen mit typischerweise einem integrierten FPGA für das modellbasierte Design von Prozessor- und FPGA-basierten Echtzeitapplikationen. Die Recheneinheit (CN) weist insbesondere einen Speicher (RAM), eine Prozessoreinheit (CPU), einen Hochgeschwindigkeitsbus SBC und eine Netzwerkschnittstelle NET auf.

Im Wesentlichen umfasst die Figur 1 ein System zur Durchführung von Rapid Control Prototyping (RCP) oder Hardware-in-the-Loop (HIL) Simulationen. Unter RCP ist insbesondere eine systematische Vorgehensweise zur schnellen Reglerentwicklung zu verstehen, welche aufgrund erhöhter Leistungsfähigkeit aktueller Computerhard- und -software, dem zunehmenden Zeitdruck in Entwicklungen und wachsender Komplexität der Aufgabenstellungen vermehrt eingesetzt wird. Dabei wird zweckmäßigerweise zunächst von dem reellen Prozess ein Prozessmodell erstellt, mittels dessen relevante Zusammenhänge eines Prozesses abgebildet werden. Danach wird für diesen simulierten Prozess in der Simulation eine Regelung beziehungsweise Steuerung erstellt.

Es sind im Allgemeinen verschiedene Testszenarien denkbar, sobald der Prozess als auch die Regelung und/oder Steuerung in der Simulation vorliegen. Üblicherweise wird für RCP der Regelungsalgorithmus mittels einer geeigneten Codegenerierung an eine leistungsfähige Simulations-Hardware gesendet, wonach der reale Prozess mit dem Regelungsalgorithmus aktiv sein kann, ohne das Erfordernis eines Seriensteuergeräts mit einem Mikrokontroller oder Ähnliches, welche für eine erste Entwicklung Nachteilen aufweisen wie beispielsweise begrenzte Prozessorleistung oder Speicherplatzbeschränkungen. Für eine HIL-Simulation wird das Prozessmodell mittels eines Codegenerators auf die Simulations-hardware übertragen und dann mit einem Seriensteuergerät bzw. der Zielhardware verbunden, auf der im späteren Betrieb die Regelung und/oder Steuerung ausgeführt wird, so ermöglicht dies eine Verbindung von simuliertem Prozess und Zielhardware. In einer Ausführungsform kann in einem weiteren Schritt mittels des gleichen Codegenerators die Zielhardware erstellt beziehungsweise programmiert werden.

Der weitere Ablauf gestaltet sich häufig in der Form, dass nach Verifikation der Funktionsweise des Regelungsalgorithmus und/oder einem Anpassen von Parametern mittels RCP und nach Untersuchung der Zielhardware durch eine Hardware in the Loop Simulation die Zielhardware und der reelle Prozess miteinander verbunden werden. Hierfür ist eine einheitliche Toolkette vorteilhaft, welche das beschriebene Vorgehen von Simulation über Reglerentwicklung bis hin zur Codegenerierung, Implementation und Untersuchung des Gesamtsystems - insbesondere bestehend aus Prozess und Regler - erlaubt.

Im Speziellen umfasst ein echtzeitfähiges Simulations-System für eine HIL-Simulation einen echtzeitfähigen Simulator ES, welcher insbesondere externe Komponenten simuliert, einen Rechenknoten CN, der über eine Netzwerkschnittstelle NET mit dem Bedienrechner PC verbunden ist. Der Rechenknoten CN weist mindestens einen Prozessor CPU, insbesondere einen Mehrkernprozessor, einen Arbeitsspeicher RAM und zumeist einen nichtflüchtigen Speicher auf, auf dem vorzugsweise ein Betriebssystem und/oder ein Bootloader hinterlegt sind. Über einen Hochgeschwindigkeitsbus SBC bzw. einen entsprechenden Controller sind ein Logikboard mit einem programmierbaren Logikbaustein FPGA, zwei I/O-Schaltungen ADC, DAC mit dem Rechenknoten verbunden. Der programmierbare Logikbaustein FPGA ist bevorzugt frei programmierbar und kann gemäß der vorliegenden Erfindung konfiguriert werden. Es kann auch vorgesehen sein, dass der echtzeitfähige Simulator mehrere Logikboards bzw. mehrere programmierbare Logikbausteine (FPGAs) auf einem Logikboard aufweist. Das Logikboard weist vorzugsweise einen oder mehrere Steckplätze für I/O-Module auf.

Auch in Figur 1 dargestellt ist ein I/O-Modul IO, welches mit dem zu testenden Steuergerät DUT verbunden ist und beispielsweise digitale Eingangs- und Ausgangssignale mit diesem austauschen kann. Die I/O-Schaltung ADC weist einen oder mehrere Analog-Digitalwandler auf, der oder die analoge Signale des zu testenden Steuergerätes DUT empfängt bzw. empfangen. Über die EO-Schaltung DAC, welche einen oder mehrere Digital-Analog-Wandler aufweist, kann der echtzeitfähige Simulator analoge Signale an das zu testende Steuergerät DUT ausgeben.

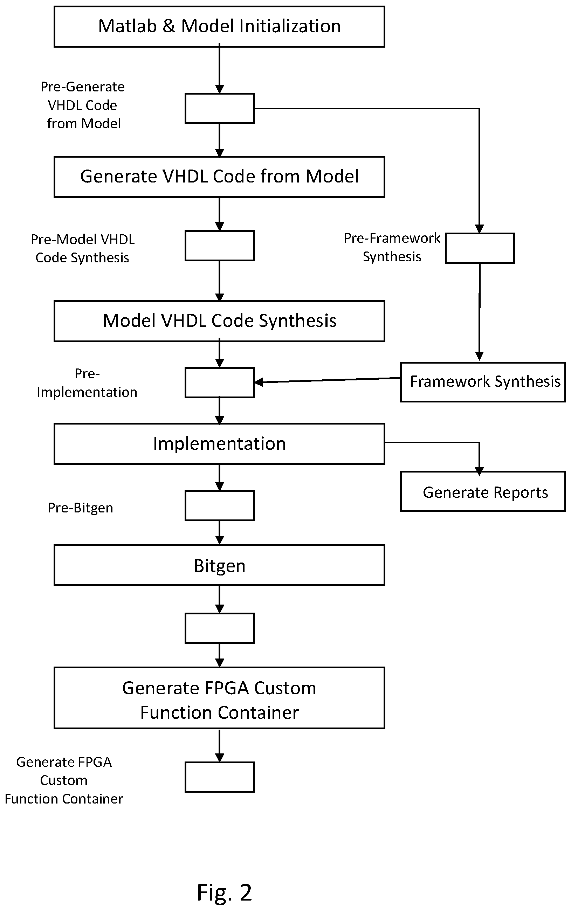

Nachfolgend wird mit Hilfe von Figur 2 zunächst grundlegend ein typischer FPGA BuildFlow beschrieben. Figur 2 zeigt dazu schematisch einen FPGA Buildflow mit seinen unterschiedlichen Phasen. Der Flow geht von einem FPGA-Model aus, dass z.B. in der Programmierumgebung MathWorks Simulink von Anwendern modelliert wurde. Zunächst startet der Anwender den Build-Flow mit der Initialisierung des FPGA-Models in Simulink. Danach folgen die nachfolgend aufgezählten FPGA-Build Phasen: VHDL Code Generierungen, Synthesen, Implementation (Place & Route), Bitstrom Generierung (Bitgen) und FPGA Custom Function Container Generierung.

Diese FPGA-Build Phasen besitzen Pre- und/oder Post-Phasen, in die sich andere Produkte und Applikationen einklinken und das jeweilige Zwischenergebnis modifizieren können. Hierzu dienen insbesondere die Hooks.

Als Programmiersprachen für das Computersystem werden beispielsweise Matlab / Simulink (z.B.), Python (z.B.) und Xilinx Vivado (TCL Scriptingsprache) verwendet. Aus Python Phasen lässt sich dabei auch auf das Xilinx Vivado Modul per Aufruf eines TCL Scripts zugreifen.

Im sogenannten Pre Generate VHDL Code from Model kann das FPGA Model z.B. noch modifiziert werden. Im Pre- Synthesis kann auf den zuvor generierten VHDL Code zugegriffen und dieser modifiziert werden, oder vorab Modifikationen am Xilinx Synthese Projekt per TCL vorgenommen werden. Bei der sogenannten "Pre Implementation" werden Änderungen am Xilinx Modul per TCL vor der Implementation Phase erlaubt, Pre Bitgen nach der Implementation Phase. Der Post Bitgen ermöglicht Änderungen z.B. am Bitstrom, oder Vorbereitungen vor der FPGA Custom Function Container Generierung, für den .xml, .c, .cpp, .h Code generiert wird. In "Post Generate FPGA Custom Function Container" kann der generierte .xml, .c, .cpp, .h Code von anderen Produkten/Applikationen modifiziert und der Container erneut verpackt werden.

Die Ausführungsphase kann sich dabei in folgender Weise gestalten: Die Ausführungsphase, in der das Prozessor- und FPGA-Model auf dem Echtzeitsystem laufen, kann unterteilt werden in eine Initialisierungs- (Init-) und eine Runtime-Phase. In der Initphase werden die Konfiguration des Echtzeitsystems und somit auch der FPGA Boards vorgenommen. Hier wird noch keine Echtzeitbedingung erfordert. Sobald die Initialisierung vollständig abgeschlossen ist, beginnt die Runtime, in der strenge Echtzeit gilt.

Für den Anwender und viele zugeordnete Applikationen ist es bedeutend, dass er/sie in einem FPGA Model sicherstellen kann, dass alle geplanten Initialisierungen erfolgreich ausgeführt wurden. Da der Build modular durch angebundene Komponenten und Applikationen beeinflusst werden kann, ist es nicht möglich, dies allein durch ein FPGA-Programming-Blockset sicherzustellen. Das FPGA Programming-Blockset bezeichnet im speziellen ein Simulink-Blockset zur Verwendung eines FPGA-Modells mit einem HIL- oder RCP-System von dSPACE (das setzt einen frei programmierbaren FPGA im System voraus, typischerweise durch Einbau eines entsprechenden Logikboards).

Figur 3 veranschaulicht die Eigenschaften eines erfindungsgemäßen abgesicherten Block RAMs oder BRAMs.

Von hoher Bedeutung bei einer FPGA-basierten Entwicklungsumgebung sind FPGA-externe Hardwarekomponenten, deren Anbindung und die Art und Weise, wie die Ergebnisse der einzelnen Schritte oder Phasen persistiert werden können. Hierzu ist eine Speichereinheit erforderlich, die sowohl während des Build-Prozesses (also vor der FPGA-Laufzeit) als auch während des FPGA-Betriebs/Initialisierung persistent beschreibbar ist.

Dafür eignet sich ein standardmäßig in einem FPGA vorhandener und typischerweise als BlockRAM bezeichneter interner Speicher im FPGA. Die Nutzung eines BlockRAM hat den Vorteil, dass unabhängig von gesetzten oder nichtgesetzten Status-Bits die Platzierung und das Routing innerhalb des FPGAs identisch bleiben kann. Die Nutzung des BlockRAM gewährleistet zudem reproduzierbare Build Ergebnisse insbesondere dann, wenn nachfolgend beschriebene Bedingungen vorliegen.

Der Standard BlockRAM (z.B. des Herstellers Xilinx) kann mittels zusätzlicher implementierter Absicherungen geschützt werden. Der in Figur 3 dargestellte Access Control repräsentiert diese zusätzlichen Sicherheitsmechanismen, da der schreibende Zugang zur zentralen Speicherstelle reglementiert bzw. eingeschränkt wird, beispielsweise durch folgende Schritte, welche insbesondere die Integrität und/oder Parität prüfen:
a. Durchführen eines Parity/CRC32 Generate nach jedem Schreib-Zugriff (Abfolge: Read, Parity Check, Write, Parity Generate) oder
b. Durchführen eines Parity/CRC32 Check vor jedem Lese-Zugriff (verhindert, dass es aufgrund von äußeren Einflüssen zu Bit-Kippern kommen kann) oder
c. ein Schreibzugriff darf immer nur ein Bit ändern (somit wird das versehentliche Überschreiben mehrerer Status-Bits verhindert). Jedes Bit darf nur einmal geändert werden. Ansonsten findet ein Access Error statt und der Vorgang wird abgebrochen.
d. Verriegelung von Schreibzugriffen auf bestimmte Bereiche (z.B. keine Schreib-zugriffe auf den Initialisierungs-Bereich, nachdem dieser abgeschlossen wurde)

In Bezug auf die Organisation der Zuteilung zwischen den Inputs der Phasen/Komponenten und der Bitpositionen mittels API-Abfrage wird im Folgenden detaillierter auf die Init(ialisierungs-)Management Komponente eingegangen. Diese umfasst insbesondere die folgenden Schritte:
Während des Build Flows weist die InitManagement Komponente allen Produkten oder Applikationen, die ein Build- oder Init-Bit setzen wollen, eine freie Bitpositionen zu. Der Aufruf zum Erhalt eine Bitposition über die API lautet beispielsweise: bitPosition = getSecuredBlockRamBitPosition(<State>, <Uni queReference>).

Die API vergibt jeweils eine freie Bitpositionen und protokolliert, für welchen <State> (FPGA Build, Internal Component Init, Internal Init, External Init) die Position vergeben wurde und speichert die übergebene <UniqueReference> (z.B. ACMC_Soultion_Model_Modification, ACMC_C_Code_Init_Modification, ... (oder eine eindeutige numerische Repräsentation)) dazu ab. Über diese Referenz kann dieses Bit später auch gesetzt werden.

Das kann über die weiter unten beschriebenen Methoden zum Zugriff auf den Secured BlockRAM mit einer in der jeweiligen Domäne (Matlab, TCL, Pyhton, ...) entsprechend bereitgestellten setSecuredBlockRamBit (<UniqueReference>)-Funktion erfolgen.

Durch die gespeicherten State-Informationen kann die Komponente beim FPGA Build die logischen UND-Verknüpfungen der Init-Bits erstellen, so dass sich die resultierenden State Outputs für Figur 3 ergeben.

Wie bereits zuvor angedeutet, besteht die Notwendigkeit, zu ganz unterschiedlichen Phasen (Build, Init, Runtime) und in ganz unterschiedlichen Umgebungen (z.B. Synthese-, Place and Route Tool) auf den Secured Block RAM zuzugreifen. Im Folgenden werden die wichtigsten Möglichkeiten mit ihren Phasen aufgeführt:
- [Modeling] Simulink-Block: Bereitstellen eines durch das Model setzbaren Init Bits (Nutzung zur FPGA Runtime)
- [Synthesis] TCL Kommando, welches ein Bit im Rahmen des Synthesis Scripts setzt (z.B. Parsen des Synthese Ergebnisses und bei bestimmten Ereignissen, soll ein Fehler über ein Bit angezeigt werden)
- [Place&Route] TCL Kommando, welches ein Bit im Rahmen des Place&Route Scripts setzt (z.B. bei dem Place&Route von partiellen Rekonfigurationen wird im Place/Route Report erkannt, dass Module fehlen oder falsche Module verwendet wurden)
- [Bitgen] TCL Kommando, welches ein Bit im Rahmen des Bitgen-Scripts setzt (z.B. über Parsen des Bitgen Report kann erkannt werden, ob ein Block RAM Initialisierung erfolgreich angewendet wurde.)
- [Software Init] write_bit_to_register() C-Funktionsaufruf in der Custom Function kann durch das Produkt, die Solution Hooks oder custom C-Code des Anwenders hinzugefügt werden.
- [FPGA Runtime] Setzen des unter Modellierung angemeldeten Init-Bit (z.B. durch externe Komponente des Anwenders an einem Digital-In Kanal)

Folgende Erläuterungen betreffen den Zugriff mittels TCL Kommandos während der FPGA Build-Phasen Synthese, Place&Route und Bitgen. Insbesondere der Zugang während des Ablaufs der Synthese, Place&Route und Bitgen Tools ist nicht so offensichtlich. Daher wird im Folgenden gezeigt, wie man mit der Xilinx-Werkzeugkette einen Eintrag im BRAM, also dem Basiselement im Secured Block Ram, setzen kann. Die Befehle der Xilinx-Werkzeugkette zur Block RAM-Manipulation lauten wie folgt:
set_property INIT_00{256'h000000000000000000000000000000000000000000000000 000000000<BITMASK>} [get_cells {<SECURED_BLOCK_RAM_CELL>}] get_property INIT_00 [get cells {<SECURED_BLOCK_RAM_CELL>}]

Der Schreibaufruf wird jedoch in eine TCL Funktion setSecuredBlockRamBit(<Unique-Reference>) gekapselt, die folgenden Sicherheitsansprüchen gerecht wird:
Damit auch einzelne Bits innerhalb einer existierenden Bitmaske gesetzt werden können, wird das Setzen mittels Read-Modify-Write der Bitmaske umgesetzt. Jedes Bit kann nur einmal beschrieben werden. Da der Zugriff aus verschiedenen FPGA Build Phasen oder verschiedenen Scripten erfolgen kann, wird die Zugriffsinformation über a) das Dateisystem oder b) einen weiteren Block Ram im FPGA persistiert. Dort wird gespeichert, ob bereits ein Zugriff auf die jeweiligen Bits erfolgt ist. Falls ja, wird keine weitere Schreiboperation vorgenommen.

Darüber hinaus bietet der Access Control auch verschiedene Möglichkeiten der Auswertung, siehe dazu auch Figur 2:
- Ausgang/Info, ob der Build vollständig und korrekt durchlaufen wurde
- Für den Fall, dass die Initphase erfolgreich durchlaufen ist:
- Check mit einer Bitmaske, die dann den Ausgang Init Complete setzt. Hierbei könnte eine Vorgabe sein, dass alle Bits des Build und der Init-Phase auf 1 stehen müssen, damit die Init-Phase erfolgreich abgeschlossen werden kann.
- Zusätzlich ist denkbar, dass es auch Freischaltungsanfragen in der Init-Phase von der RTLib mit gesendeter Freischaltmaske gibt. Dies erleichtert optionale Bedingungen.
- Um externe Hardwarekomponenten mit in die Init-Phase einzubeziehen, gibt es neben dem Init Complete-Signal auch einen (oder mehrere) Internal Init Complete-Signal(e). Dieser Signaltyp signalisiert angebundenen externen Hardwarekomponenten, dass die Simulator-Hardware durchinitialisiert ist und nur noch auf externe Komponenten (bzw. jeweils auf eine bestimmte externe Hardwarekomponente) wartet. Somit können diese ebenfalls ihre Initialisierung abschließen, in der sie ggf. auf den Simulator gewartet haben und dem Simulator anschließend ihr External Init Complete-Signal zurückliefern, damit der Simulator in das vollständige Init Complete übergehen kann. Auf diese Weise werden mögliche Deadlocks vermieden, in der Simulator und externe Hardwarekomponenten sonst gegenseitig auf ihr Init Complete warten würden.
- Das zuvor beschriebene Verfahren kann auch auf FPGA-interne Komponenten (z.B. LVDS oder MGT Initialisierung) / FPGA Partitionen) angewendet werden, die sich zunächst über ein Internal Component Init Complete-Signal im Access Control gegenseitig freischalten, um nicht in einem Deadlock zu verharren.

### Bezugszeichenliste

- 1: Computersystem
- 2: Computer
- 3: FPGA
- 4: beschreibbarer Speicher

## Patentansprüche

1. Computersystem (1) zum Durchlaufen von mehreren von einem Computer (2) gesteuerten Build- und/oder Initialisierungsschritten für eine FPGA-basierte Applikation, wobei
das Computersystem (1) dazu eingerichtet ist, einen FPGA-Programmcode im Rahmen von Build-Schritten zu erzeugen, diesen auf einen FPGA (3) zu transferieren und im Rahmen von Initialisierungsschritten für ein Ablaufen vorzubereiten, und
das Computersystem (1) weiter dazu eingerichtet ist, Ergebnisse der Build- und/oder Initialisierungsschritte zentral in einen beschreibbaren Speicher (4) abzuspeichem und/oder zu kontrollieren und durch Auslesen des beschreibbaren Speichers (4) vor einem Build- und/oder Initialisierungsschritt und/oder vor Ablaufen des initialisierten FPGA-Programmcodes zu prüfen, ob mindestens ein vorheriger Build- und/oder Initialisierungsschritt fehlerfrei durchlaufen worden ist.

2. Computersystem nach dem vorherigen Anspruch, wobei der beschreibbare Speicher (4) ein Block RAM des FPGA (3) ist.

3. Computersystem nach einem der vorherigen Ansprüche, wobei das Computersystem (1) eingerichtet ist, einen Build- und/oder Initialisierungsschritt und/oder das Ablaufen des initialisierten FPGA-Programmcodes nur dann durchzuführen, wenn der vorherige Build- und/oder Initialisierungsschritt fehlerfrei durchlaufen worden ist.

4. Computersystem nach einem der vorherigen Ansprüche, wobei das Computersystem (1) dazu eingerichtet ist, dass auf dem beschreibbaren Speicher (4) unter vordefinierten Bedingungen Schreibzugriff gewährt wird.

5. Computersystem nach einem der vorherigen Ansprüche, wobei das Computersystem (1) eingerichtet ist, auf dem beschreibbaren Speicher (4) Schreib-Zugriffe auf vorbestimmte Bit-Bereiche zu unterbinden.

6. Computersystem nach einem der der vorherigen Ansprüche, wobei das Computersystem (1) eingerichtet ist, auf dem beschreibbaren Speicher (4) nur ein Bit pro Schreib-Zugriff zu ändern und/oder jedes Bit nur einmal zu ändern.

7. Computersystem nach einem der vorherigen Ansprüche, wobei der angesteuerte FPGA (4) und/oder die FPGA-basierte Applikation Teil eines echtzeitfähigen Systems ist.

8. Computersystem nach einem der vorherigen Ansprüche, wobei das Computersystem (1) dazu eingerichtet ist, ein Regelungssystem oder Teile eines Regelkreises zu steuern und/oder zu simulieren.

9. Computersystem nach einem der vorherigen Ansprüche, wobei der Computer (2) eingerichtet ist, einen oder mehrere der folgenden Build- und/oder Initialisierungsschritte auszuführen: VHDL Code Generierung, Synthese, Implementierung, Bitstrom Generierung, Erstellung eines FPGA Applikations-Container.

10. Computersystem nach einem der vorherigen Ansprüche, wobei das Computersystem (1) eingerichtet ist, auf dem beschreibbaren Speicher (4) eine Integritätsprüfung nach einem Schreib-Zugriff und/oder vor jedem Lese-Zugriff durchzuführen.

11. Computersystem nach vorherigem Anspruch, wobei das Computersystem (1) eingerichtet ist, auf dem beschreibbaren Speicher (4) eine Integritätsprüfung mittels einer Prüfsumme durchzuführen.

12. Verfahren zum fehlerfreien Durchlaufen von mehreren von einem Computer (2) gesteuerten Build- und/oder Initialisierungsschritten für eine FPGA-basierte Applikation, mit den Schritten
- Erzeugen eines FPGA-Programmcodes im Rahmen von Build-Schritten,
- Transferieren des erzeugten FPGA-Programmcodes auf einen FPGA (3),
- Ausführen von Initialisierungsschritten als Vorbereitung für ein Ablaufen des FPGA-Programmcodes,
- Abspeichern und Kontrollieren der Ergebnisse der Build- und/oder Initialisierungsschritte in einem zentralen beschreibbaren Speicher (4), und
- Prüfen im beschreibbaren Speicher (4), ob mindestens ein vorheriger Build- und/oder Initialisierungsschritt fehlerfrei durchlaufen worden ist.

13. Verfahren nach vorherigem Anspruch, weiter umfassend den Schritt:
- Durchführen eines weiteren Build- und/oder Initialisierungsschrittes und/oder Ablaufen des initialisierten FPGA-Programmcodes nur dann, wenn der vorherige Build- und/oder Initialisierungsschritt fehlerfrei durchlaufen worden ist.

14. Verfahren nach einem der beiden vorherigen Ansprüche, mit dem Schritt:
- Zuteilen von Bitpositionen in dem beschreibbaren Speicher (4) mittels API-Abfrage an eine Initialisierungs-Management-Komponente.

15. Verfahren nach dem vorherigen Anspruche, wobei die Initialisierungs-Management-Komponente folgende Schritte ausführt:
- Zuweisen einer freien Bitposition für angeschlossene Hard- und/oder Softwarekomponenten, und
- Protokollieren der übergebenen Bitposition und/oder Abspeichern einer Referenz für die Bitposition in einem beschreibbaren Speicher (4).
